# EUROPÄISCHE PATENTSCHRIFT

(11) **EP 0 706 109 B1**
(45) Veröffentlichungstag und Bekanntmachung des Hinweises auf die Patenterteilung: **01.03.2000**
(21) Anmeldenummer: 95890191.0
(22) Anmeldetag: 30.10.1995
(51) Int. Cl.: G06F 1/16

(54) **Aufnahmevorrichtung für einen mobilen Computerarbeitsplatz**
Carrying case for a portable workstation
Mallette de transport pour ordinateur portable

(43) Veröffentlichungstag der Anmeldung: 10.04.1996
(73) Patentinhaber: Hödl, Fritz, Dr., 1120 Wien (AT)
(72) Erfinder: Hödl, Fritz, Dr., 1120 Wien (AT)
(74) Vertreter: Müllner, Erwin, Dr.

(56) Entgegenhaltungen:
- DE-U- 9 002 228
- GB-A- 2 276 312
- PATENT ABSTRACTS OF JAPAN vol. 015 (P-1174) ,4.März 1991 & JP-A-02 304608 (CANON INC.)

## Beschreibung

Die vorliegende Erfindung betrifft eine Aufnahmevorrichtung für einen mobilen Computerarbeitsplatz, wobei die Aufnahmevorrichtung zumindest zwei in Längsrichtung der Aufnahmevorrichtung hintereinander liegende Ausnehmungen für einen tragbaren Personalcomputer und für einen Drucker mit horizontaler Papierausgabe in Richtung zum Personalcomputer umfaßt, wobei zwischen den beiden Ausnehmungen eine Papierumlenkung zum Umlenken des vom Drucker horizontal ausgegebenen Papiers in eine etwa vertikale Lage vorgesehen ist.

Aufnahmevorrichtungen zum Transport von tragbaren Personalcomputern samt Druckern sind bekannt. Um die Geräte zu verwenden, wird der Deckel der Aufnahmevorrichtung geöffnet oder abgenommen. Danach sollen die Geräte mit möglichst wenig zusätzlichen Manipulationen (also ohne Herausnehmen aus der Aufnahmevorrichtung) verwendbar sein.

Derartige Aufnahmevorrichtungen beinhalten normalerweise nicht nur Platz für die entsprechenden Geräte, sondern beinhalten auch die notwendige Infrastruktur wie Kabel, Akkus, Ladegeräte u.dgl. Oft ist zusätzlich auch Platz für mobile Modems und Funktelefone vorgesehen.

Viele tragbare Drucker ziehen das Papier von oben ein und geben es auch nach oben aus. Hier gibt es kein Problem, die Geräte so, wie sie zum Transport in der Aufnahmevorrichtung angeordnet sind, auch zu verwenden. Es gibt aber auch Drukker, die das Papier von oben einziehen und horizontal ausgehen. Aus Platzgründen müssen diese Drucker so angeordnet werden, daß die Papierausgabe in Richtung zum Personalcomputer erfolgt. Es sind dann aber Vorkehrungen notwendig, die verhindern, daß das Papier mit dem Personalcomputer kollidiert. Bekannt ist unter anderem, den Drucker seitlich aus der Aufnahmevorrichtung auszuschieben. Dies erfordert jedoch zusätzlichen Platz seitlich neben der Aufnahmevorrichtung und ist auch wegen der zahlreichen Kabelverbindungen zum Drucker unpraktisch (Kabelsalat). Es ist auch bereits bekannt, den Personalcomputer erhöht anzuordnen, sodaß das Papier unter dem Personalcomputer durchgeschoben werden kann. Dies hat wiederum den Nachteil, daß die Aufnahmevorrichtung relativ hoch (also dick) ausgebildet werden muß. Außerdem kann der Platz unter dem Personalcomputer nicht für andere Zwecke (z.B. Modem, Ladegerät od.dgl.) genützt werden. Die Raumausnützung ist daher insgesamt sehr schlecht.

Es ist auch schon bekannt, zwischen dem Drucker und dem Personalcomputer in der Aufnahmevorrichtung eine Papierumlenkung vorzusehen, die das vom Drucker horizontal ausgegebene Papier in eine etwa vertikale Lage umlenkt. Das Papier wird somit auf die Rückseite des Bildschirms des Personalcomputers geschoben. Von dort fällt es dann irgendwie auf den Drucker. Diese Lösung ist akzeptabel, wenn immer nur ein Blatt gedruckt und dann sofort entnommen wird. Werden mehrere Blätter unbeaufsichtigt gedruckt, so vermischt sich das bedruckte Papier mit dem Papiervorrat des Druckers, was unweigerlich zu Papierstaus führt.

Es ist Aufgabe der vorliegenden Erfindung, diesen Nachteil zu beseitigen und die Aufnahmevorrichtung dahingehend zu verbessern, daß trotz optimaler Platzausnützung und ohne die Notwendigkeit, den Drucker zu verschieben, beliebig viel Papier unbeaufsichtigt gedruckt werden kann.

Diese Aufgabe wird durch eine Aufnahmevorrichtung der eingangs genannten Art erfindungsgemäß dadurch gelöst, daß zwischen den beiden Ausnehmungen zwei scherenartig miteinander verbundene Papieranlagestäbe vorgesehen sind, deren untere Enden im Bereich der Papierumlenkung quer zur Längsrichtung der Aufnahmevorrichtung linear verschiebbar gelagert sind und deren Länge geringer als die innere Breite der Aufnahmevorrichtung ist.

Die erfindungsgemäß vorgesehenen Papieranlagestäbe verhindern, daß das Papier auf den Drucker fallen kann. Das Papier wird zwischen den Papieranlagestäben und der Rückseite des Bildschirmes des Personalcomputers gestapelt. Da die Papieranlagestäbe während des Druckens schräg nach oben stehen müssen, kann der Deckel der Aufnahmevorrichtung in diesem Zustand nicht geschlossen werden. Es sind daher Maßnahmen notwendig, um die Papieranlagestäbe in eine versenkte Lage bringen zu können, sodaß der Deckel der Aufnahmevorrichtung geschlossen werden kann. Dies wird dadurch erreicht, daß die beiden Papieranlagestäbe etwa in der Mitte gelenkig miteinander verbunden sind, sodaß eine Art Schere entsteht. Die unteren Enden der Papieranlagestäbe sind quer zur Längsrichtung der Aufnahmevorrichtung linear verschiebbar gelagert. Da die Länge der Papieranlagestäbe geringer ist als die innere Breite der Aufnahmevorrichtung, kann durch leichten Druck auf ein freies Ende eines Papieranlagestabes bewirkt werden, daß die unteren Ende solange linear auseinandergleiten, bis beide Stäbe flach in der Aufnahmevorrichtung liegen. Das Aufstellen der Papieranlagestäbe ist genauso einfach: es muß nur ein freies Ende der beiden Papieranlagestäbe angehoben werden.

Die erfindungsgemäße Lösung ist damit einfachst zu bedienen und benötigt so gut wie keinen zusätzlichen Platz. Auch wenn die Papieranlagestäbe versehentlich nicht aufgestellt wurden, kann gedruckt werden; allerdings kann es in diesem Fall dann, wenn mehrere Blätter gedruckt werden, zu einem Papierstau kommen.

Es ist zweckmäßig, wenn die freien Enden der Papieranlagestäbe in Richtung zur Ausnehmung für den Drucker abgewinkelt sind. Da ein leichter Grat am Ende der Papieranlagestäbe oft nicht zu verhindern ist, das Papier an einem Grat aber sehr leicht hängenbleibt, ist gemäß einem Merkmal der Erfindung vorgesehen, die Enden der Papieranlagestäbe vom Papier weg, also in Richtung zum Drucker abzuwinkeln. Auf diese Weise wird ein Hängenbleiben von Papier und damit ein Papierstau zuverlässig vermieden.

Es ist weiters zweckmäßig, wenn an den freien Enden der Papieranlagestäbe kugelförmige Griffe angebracht sind. Die kugelförmigen Griffe ermöglichen nicht nur eine leichte Bewegung der Papieranlagestäbe in ihre Betriebsstellung bzw. in ihre versenkte Stellung, sondern sie schützen auch vor Verletzungen (insbesondere der Augen) an den freien Enden der Papieranlagestäbe.

Eine einfache Möglichkeit zur linear verschiebbaren Lagerung der Papieranlagestäbe besteht darin, daß eine Achse über der Papierumlenkung vorgesehen ist, auf der die Papieranlagestäbe mittels Hülsen gelagert sind.

Dabei ist es zweckmäßig, wenn die Achse elastisch ist und an ihren Enden durch Einstecken in Öffnungen in Erhöhungen gelagert ist. Auf diese Weise kann die Achse samt Papieranlagestäben einfach und ohne Werkzeug montiert und demontiert werden, indem sie soweit gebogen wird, bis ihre Enden aus den Erhöhungen herausrutschen bzw. in diese hineingesteckt werden können. Nach Loslassen nimmt die Achse wieder ihre gerade Gestalt an und ist zuverlässig in den Erhöhungen fixiert.

Die Verwendung einer Achse zur Lagerung der Papieranlagestäbe hat den Vorteil, daß die Achse gleichzeitig als Teil der Papierumlenkung dienen kann. Es ist nämlich möglich, daß die Papierumlenkung eine im Längsschnitt der Aufnahmevorrichtung gesehen konkav gekrümmte, am oberen Ende etwa senkrecht verlaufende Fläche aufweist, in deren Hohlraum die Achse angebracht ist, und daß auf der Achse im Bereich der konkav gekrümmten Fläche zumindest ein, vorzugsweise zwei Zahnrädchen zur Papierführung drehbar angebracht sind. Die Papierführung ist in diesem Fall durch die konkav gekrümmte Fläche zusammen mit den auf der Achse gelagerten Zahnrädchen gebildet, wobei die Achse gleichzeitig die Lagerung für die Papieranlagestäbe bildet. Auf diese Weise kommt die vorliegende Erfindung mit einer minimalen Anzahl an zusätzlichen Bauteilen aus, was sowohl aus Platzgründen als auch aus Kostengründen sehr günstig ist.

Zur axialen Fixierung der Zahnrädchen und zur Begrenzung der linearen Verschiebbarkeit der Papieranlagestäbe kann die Achse Verdickungen aufweisen.

In diesem Fall wird bevorzugt, daß die konkav gekrümmte Fläche und die Zahnrädchen etwa symmetrisch zur Längsmittellinie der Aufnahmevorrichtung angebracht sind und daß die Verdickungen zur Begrenzung der linearen Verschiebbarkeit der Papieranlagestäbe asymmetrisch zur Längsmittelebene der Aufnahmevorrichtung sind. Die meisten Drucker geben das Papier nämlich nicht exakt symmetrisch zur Längsmittelebene des Druckers aus. Aus optischen Gründen ist es aber zu bevorzugen, wenn die konkav gekrümmte Fläche, die relativ stark ins Auge springt, etwa symmetrisch zur Längsmittellinie der Aufnahmevorrichtung angebracht ist. In diesem Falle müssen dann auch die Zahnrädchen etwa symmetrisch zur Längsmittelline der Aufnahmevorrichtung angebracht sein, damit sie mit der konkav gekrümmten Fläche zusammenwirken können. Damit die Papieranlagestäbe aber in ihrer Betriebsstellung symmetrisch zum Papier (und nicht zum Koffer) liegen, sind die Verdickungen zur Begrenzung der linearen Verschiebbarkeit der Papieranlagestäbe asymmetrisch zur Längsmittelebene ausgebildet oder angeordnet.

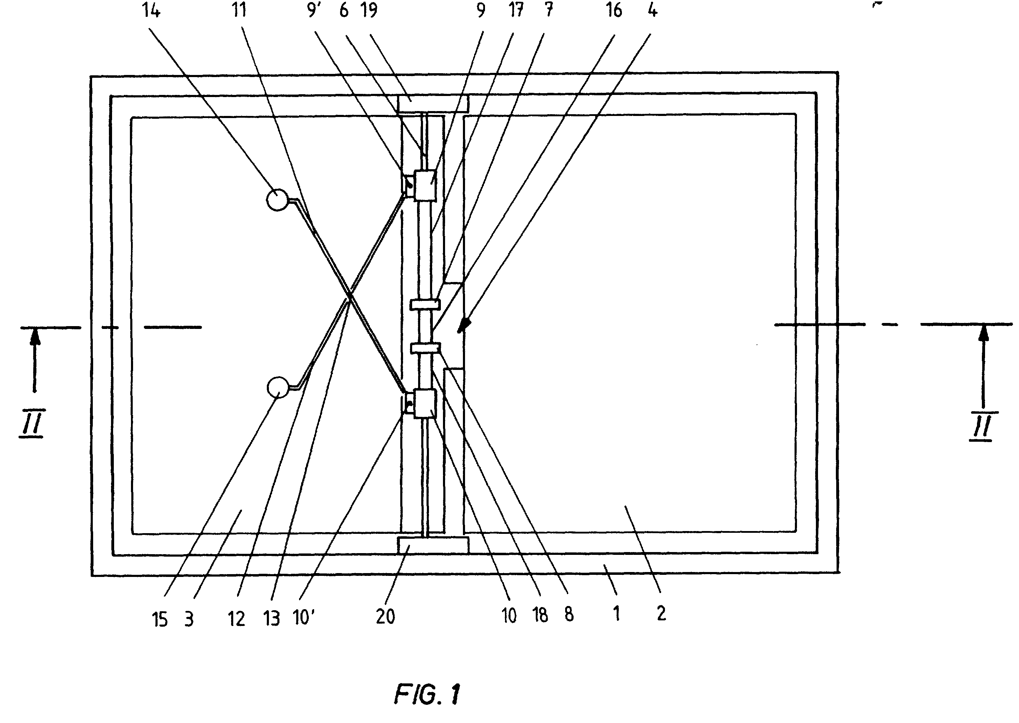

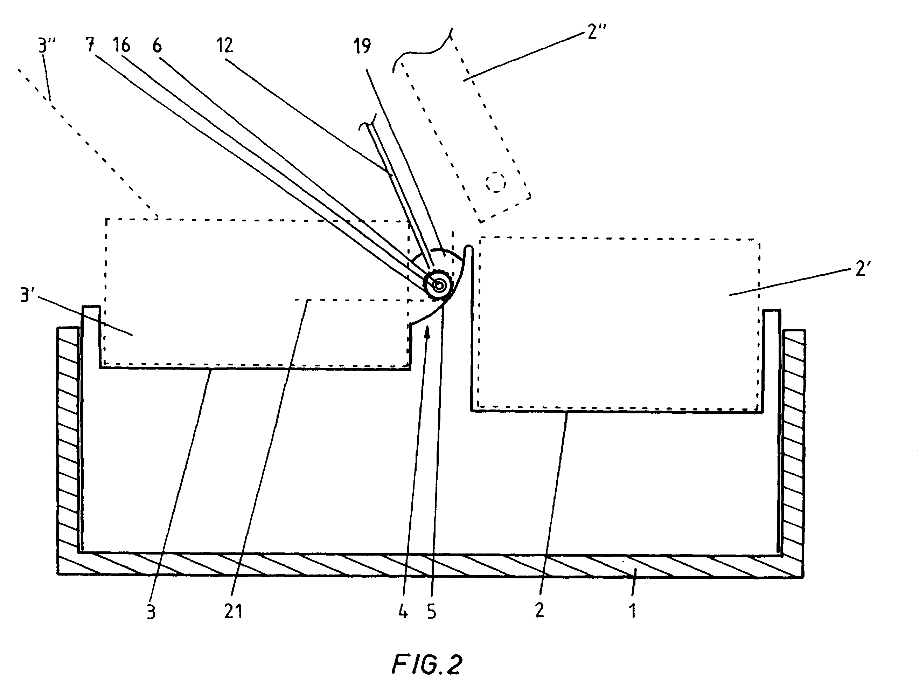

Anhand der beiliegenden Figuren wird die vorliegende Erfindung näher beschrieben. Es zeigt: Fig. 1 eine Draufsicht auf den Unterteil einer erfindungsgemäßen Aufnahmevorrichtung; und Fig. 2 einen Schnitt entlang der Linie II-II in Fig. 1.

Die Aufnahmevorrichtung 1 ist als Koffer mit abnehmbarem Deckel ausgebildet. Im Unterteil ist ein durch Tiefziehen hergestellter Einsatz vorhanden, der eine Ausnehmung 2 für einen Personalcomputer 2' sowie eine Ausnehmung 3 für einen Drucker 3' aufweist. Herkömmliche Personalcomputer haben einen Bildschirm 2", der sich für den Betrieb um mehr als 90° aufklappen läßt und der sich für den Transport zuklappen läßt. Der Drucker 3', der für diese Aufnahmevorrichtung 1 bestimmt ist, weist eine Papieranlagefläche 3" auf, die schräg nach oben gerichtet ist. Das Papier 21 wird von dort abgezogen, im Drucker bedruckt und horizontal (nach rechts, wie in Fig. 2 gesehen) ausgegeben. Da in dieser Richtung jedoch infolge des Personalcomputers 2' nur sehr wenig Platz zur Verfügung steht, ist eine Papierumlenkung 4 vorgesehen. Diese besteht aus einer konkav gekrümmten Fläche 5 sowie zwei Zahnrädchen 7, 8, die auf einer Achse 6 drehbar gelagert sind und die konkav gekrümmte Fläche 5 berühren. Die Zahnrädchen 7, 8 bestehen zweckmäßigerweise aus einem relativ weichem Material, das das Gehäuse des Druckers 3' nicht zerkratzen kann. Das Papier wird zwischen den Zahnrädchen 7, 8 und der konkav gekrümmten Fläche 5 hindurchgeschoben und auf diese Weise um etwas mehr als 90° umgelenkt, sodaß es etwa senkrecht nach oben, mit einer leichten Neigung in Richtung zum Drucker 3', ausgegeben wird. Dabei berührt es den aufgeklappten Bildschirm 2" und wird dadurch noch zusätzlich in Richtung zum Drucker 3' abgelenkt. Damit es nicht auf den Drucker 3' fallen kann, sind zwei Papieranlagestäbe 11, 12 vorgesehen, die etwa in der Mitte durch eine Achse 13 miteinander gelenkig verbunden sind, sodaß sich eine Art Schere ergibt. Auch die Papieranlagestäbe 11, 12 haben zweckmäßigerweise eine weiche Oberfläche, sodaß der Drucker 3' nicht beschädigt werden kann. Auf der Achse 6 sind außer den Zahnrädchen 7, 8 auch Hülsen 9, 10 vorhanden, die entlang der Achse 6 verschiebbar sind. Die unteren Enden der Papieranlagestäbe 11, 12 sind mit den Hülsen 9, 10 über Achsen 9', 10' verbunden. An ihren oberen Enden sind die Papieranlagestäbe 11, 12 in Richtung zum Drucker 3', also vom Papier 21 weg, abgewinkelt; sie sind dort außerdem mit kugelförmigen Griffen 14, 15 versehen. Zwischen den Zahnrädchen 7, 8 ist auf die Achse 6 eine Hülse 16 kraftschlüssig aufgeschoben; sie verhindert, daß sich die Zahnrädchen 7, 8 zueinander bewegen können. Um sie auch nach außen zu fixieren, sind weitere Hülsen 17, 18 auf die Achse 6 kraftschlüssig aufgeschoben. Dabei ist die Hülse 17 länger als die Hülse 18; die Hülsen 17, 18 bewirken nämlich auch einen Anschlag für die verschiebbaren Hülsen 9, 10 der Papieranlagestäbe 11, 12; durch die unterschiedlich lange Ausbildung sind die Papieranlagestäbe 11, 12 in aufgestelltem Zustand asymmetrisch angeordnet.

Zur Lagerung der Achse 6 sind im Einsatz der Aufnahmevorrichtung 1 Erhöhungen 19, 20 vorgesehen.

Die erfindungsgemäße Aufnahmevorrichtung funktioniert wie folgt:

Um aus der in den Figuren dargestellten Betriebsstellung wieder zur Transportstellung zu gelangen, ist es lediglich notwendig, den Bildschirm 2" auf den Personalcomputer 2' zu klappen, die Papieranlagefläche 3" auf den Drucker 3' zu klappen und die Papieranlagestäbe 11, 12 in die versenkte Stellung zu bringen. Für letzteren Vorgang ist es nur notwendig, einen der beiden kugelförmigen Griffe 14, 15 zu fassen und hinunterzudrücken. Dadurch gleiten die beiden Hülsen 9, 10 auf der Achse 6 auseinander, und die Schere öffnet sich immer weiter, bis die beiden Papieranlagestäbe 11, 12 etwa parallel zueinander stehen. Da sie etwas kürzer sind als die lichte Breite der Aufnahmevorrichtung, können sie vollständig versenkt werden. Nun kann der Deckel der Aufnahmevorrichtung aufgesetzt und geschlossen werden. Um wieder zur Betriebsstellung zu gelangen, muß lediglich - wie bei allen derartigen Geräten - der Bildschirm 2" und die Papieranlagefläche 3" des Druckers 3' in die Betriebsstellung gebracht werden; darüber hinaus muß nur noch eine der beiden kugelförmigen Griffe 14, 15 gefaßt und nach oben gehoben werden, bis die Hülsen 9, 10 an den Hülsen 17, 18 anliegen. Die Papieranlagestäbe 11, 12 befinden sich dann automatisch in der richtigen Stellung; die Schere hat den richtigen Öffnungswinkel, und auch die Lage relativ zur Längsachse der Aufnahmevorrichtung ist - infolge der unterschiedlichen Länge der beiden Hülsen 17, 18 - genau auf die Position des auszugebenden Papiers 21 abgestimmt. Die Neigung bezüglich der Vertikalen wird dadurch fixiert, daß die Papieranlagestäbe 11, 12 am Drucker 3' anliegen.

Die vorliegende Erfindung ist natürlich nicht auf das beschriebene Ausführungsbeispiel beschränkt. Insbesondere die Papierumlenkung kann auch auf andere Art und Weise gebildet sein, z.B. durch einen Schlitz, der oben und unten eine feste Wand aufweist. Die Verwendung der Zahnrädchen 7, 8 hat jedoch den Vorteil, daß diese bei Tintenstrahldruckern die aufgebrachte Tinte nicht verwischen.

## Patentansprüche

1. Aufnahmevorrichtung (1) für einen mobilen Computerarbeitsplatz, wobei die Aufnahmevorrichtung (1) zumindest zwei in Längsrichtung der Aufnahmevorrichtung (1) hintereinander liegende Ausnehmungen (2, 3) für einen tragbaren Personalcomputer (2') und für einen Drucker (3') mit horizontaler Papierausgabe in Richtung zum Personalcomputer (2') umfaßt, wobei zwischen den beiden Ausnehmungen (2, 3) eine Papierumlenkung (4) zum Umlenken des vom Drucker (3') horizontal ausgegebenen Papiers (21) in eine etwa vertikale Lage vorgesehen ist, **dadurch gekennzeichnet,** daß zwischen den beiden Ausnehmungen (2, 3) zwei scherenartig (Achse 13) miteinander verbundene Papieranlagestäbe (11, 12) vorgesehen sind, deren untere Enden im Bereich der Papierumlenkung (4) quer zur Längsrichtung der Aufnahmevorrichtung (1) linear verschiebbar gelagert sind und deren Länge geringer als die innere Breite der Aufnahmevorrichtung (1) ist.

2. Aufnahmevorrichtung nach Anspruch 1, **dadurch gekennzeichnet,** daß die freien Enden der Papieranlagestäbe (11, 12) in Richtung zur Ausnehmung (3) für den Drucker (3') abgewinkelt sind.

3. Aufnahmevorrichtung nach Anspruch 2, **dadurch gekennzeichnet,** daß an den freien Enden der Papieranlagestäbe (11, 12) kugelförmige Griffe (14, 15) angebracht sind.

4. Aufnahmevorrichtung nach einem der Ansprüche 1 bis 3, **dadurch gekennzeichnet,** daß zur linear verschiebbaren Lagerung der Papieranlagestäbe (11, 12) eine Achse (6) über der Papierumlenkung (4) vorgesehen ist, auf der die Papieranlagestäbe (11, 12) mittels Hülsen (9, 10) gelagert sind.

5. Aufnahmevorrichtung nach Anspruch 4, **dadurch gekennzeichnet,** daß die Achse (6) elastisch ist und an ihren Enden durch Einstecken in Öffnungen in Erhöhungen (19, 20) gelagert ist.

6. Aufnahmevorrichtung nach Anspruch 4 oder 5, **dadurch gekennzeichnet,** daß die Papierumlenkung (4) eine im Längsschnitt der Aufnahmevorrichtung gesehen konkav gekrümmte, am oberen Ende etwa senkrecht verlaufende Fläche (5) aufweist, in deren Hohlraum die Achse (6) angebracht ist, und daß auf der Achse (6) im Bereich der konkav gekrümmten Fläche (5) zumindest ein, vorzugsweise zwei Zahnrädchen (7, 8) zur Papierführung drehbar angebracht sind.

7. Aufnahmevorrichtung nach Anspruch 6, **dadurch gekennzeichnet,** daß die Achse (6) zur axialen Fixierung der Zahnrädchen (7, 8) und zur Begrenzung der linearen Verschiebbarkeit der Papieranlagestäbe (11, 12) Verdickungen (Hülsen 16-18) aufweist.

8. Aufnahmevorrichtung nach Anspruch 7, **dadurch gekennzeichnet,** daß die konkav gekrümmte Fläche (5) und die Zahnrädchen (7, 8) etwa symmetrisch zur Längsmittellinie der Aufnahmevorrichtung angebracht sind und daß die Verdickungen (Hülsen 17, 18) zur Begrenzung der linearen Verschiebbarkeit der Papieranlagestäbe (11, 12) asymmetrisch zur Längsmittelebene der Aufnahmevorrichtung sind.

## Claims

1. Holder device (1) for a mobile computer workstation, the holder device (1) comprising at least two recesses (2, 3) located one behind the other in the longitudinal direction of the holder device (1) for a portable personal computer (2') and for a printer (3') with horizonal paper output in the direction of the personal computer (2'), a paper deflector (4) being provided between the two recesses (2, 3) to deflect the paper (21) output horizontally by the printer (3') into an approximately vertical position, characterized in that two paper rest bars (11, 12) joined together by a scissors-type connection (axis 13) are provided, the lower ends of said bars being mounted in the region of the paper deflector (4) so as to be linearly displaceable transversely to the longitudinal direction of the holder device (1) and the length of said bars being smaller than the inner width of the holder device (1).

2. Holder device according to Claim 1, characterized in that the free ends of the paper rest bars (11, 12) are angled towards the recess (3) for the printer (3').

3. Holder device according to Claim 2, characterized in that spherical grips (14, 15) are mounted at the free ends of the paper rest bars (11,12).

4. Holder device according to any one of Claims 1 to 3, characterized in that an axle (6) for the linearly displaceable mounting of the paper rest bars (11, 12) is provided above the paper deflector (4), and the paper rest bars (11, 12) are mounted thereon by means of sleeves (9, 10).

5. Holder device according to Claim 4, characterized in that the axle (6) is elastic, and is mounted by insertion of its ends into openings in elevations (19, 20).

6. Holder device according to Claim 4 or 5, characterized in that the paper deflector (4) has a surface (5) which has concave curvature when viewed in the longitudinal section of the holder device and extends approximately vertically at the upper end and in whose concavity the axle (6) is fixed, and in that at least one, and preferably two, cogwheels (7, 8) for guiding the paper are rotatably mounted on the axle (6) in the region of the concave surface (5).

7. Holder device according to Claim 6, characterized in that the axle (6) has thickenings (sleeves 16-18) for the axial fixings of the cogwheels (7, 8) and for delimiting the linear displaceability of the paper rest bars (11, 12).

8. Holder device according to Claim 7, characterised in that the concave surface (5) and the cogwheels (7, 8) are disposed approximately symmetrically with respect to the longitudinal centre line of the holder device and in that the thickenings (sleeves 17, 18) for delimiting the linear displaceability of the paper rest bars (11, 12) are asymmetrical with respect to the longitudinal centre plane of the holder device.

## Revendications

1. Dispositif de réception (1) pour un poste de travail informatique mobile, dans lequel le dispositif de réception (1) contient au moins deux cavités (2, 3), disposées l'une derrière l'autre dans la direction longitudinale du dispositif de réception (1), pour un ordinateur personnel portable (2') et pour une imprimante (3') à sortie du papier dans la direction horizontale par rapport à l'ordinateur personnel (2'), dans lequel est prévu, entre les deux cavités (2, 3), un organe de déviation du papier (4) pour dévier le papier (21) sortant horizontalement de l'imprimante (3') selon une position sensiblement verticale, caractérisé en ce qu'entre les deux cavités (2, 3), sont prévues deux barres d'appui de papier (11, 12) reliées l'une à l'autre en ciseaux (axe 13), dont les extrémités inférieures sont montées, dans la zone de l'organe de déviation de papier (4), susceptibles de coulisser linéairement transversalement à la direction longitudinale du dispositif de réception (1) et dont la longueur est inférieure à la largeur intérieure du dispositif de réception (1).

2. Dispositif de réception selon la revendication 1, caractérisé en ce que les extrémités libres des barres d'appui de papier (11, 12) sont repliées dans la direction de la cavité (3) pour l'imprimante (3').

3. Dispositif de réception selon la revendication 2, caractérisé en ce qu'aux extrémités libres des barres d'appui de papier (11, 12), sont montés des organes de saisie (14, 15) en forme de boule.

4. Dispositif de réception selon l'une des revendications 1 à 3, caractérisé en ce que, pour le positionnement des barres d'appui de papier (11, 12) susceptibles de coulisser linéairement, est prévu, au-dessus de l'organe de déviation de papier (4), un axe (6) sur lequel les barres d'appui de papier (11, 12) sont montées sur palier à l'aide de manchons (9, 10).

5. Dispositif de réception selon la revendication 4, caractérisé en ce que l'axe (6) est élastique et est monté sur palier à ses extrémités par enfichage dans des ouvertures prévues dans des bossages ou surélévations (19, 20).

6. Dispositif de réception selon la revendication 4 ou 5, caractérisé en ce que l'organe de déviation de papier (4) comporte une surface (5), incurvée de façon concave lorsqu'elle est vue selon la coupe longitudinale du dispositif de réception, et s'étendant de façon sensiblement verticale à l'extrémité supérieure, l'axe (6) étant disposé dans un espace creux de cette surface, et en ce que sont montées à rotation sur l'axe (6), dans la zone de la surface (5) incurvée de façon concave, au moins une, de préférence deux petites roues dentées (7, 8) pour le guidage du papier.

7. Dispositif de réception selon la revendication 6, caractérisé en ce que l'axe (6) comporte des parties plus épaisses (manchons 16 à 18) pour la fixation axiale des petites roues dentées (7, 8) et pour limiter la capacité de déplacement linéaire des barres d'appui de papier (11, 12).

8. Dispositif de réception selon la revendication 7, caractérisé en ce que la surface (5) incurvée de façon concave et les petites roues dentées (7, 8) sont montées de façon sensiblement symétrique par rapport à la ligne longitudinale médiane du dispositif de réception, et en ce que les parties plus épaisses (manchons 17, 18), pour limiter la capacité de déplacement linéaire des barres d'appui de papier (11, 12), sont asymétriques par rapport au plan longitudinal médian du dispositif de réception.
